# EUROPEAN PATENT APPLICATION

(11) **EP 2 589 320 A1**
(43) Date of publication of application: **08.05.2013**
(21) Application number: 11187980.5
(22) Date of filing: 04.11.2011
(51) Int. Cl.: A47J 31/057

(54) **Fully automated tea machine with integrally disposed brewing chamber**

(71) Applicant: Eksen Makine Sanayi ve Ticaret A.S., 41480 Kocaeli (TR)
(72) Inventor: Tahincioglu, Besim, 41480 Kocaeli (TR)
(74) Representative: Sevinç, Erkan

(57) **Abstract**

An electrical household appliance with a first receptacle (5) for boiling water and a second receptacle (20) in thermal communication with said first receptacle (5), in which plant leaves are placeable in heated water for brewing purposes is provided. An electrical heater means (25) is disposed at the base of said first receptacle (5). Fluid communication means (13, 19) in between said first and second receptacles (5, 20) provide transferring heated water from said first receptacle (5) to said second receptacle (20). A transfer control means (26) selectively opens fluid communication thereinbetween. Said first receptacle (5) physically encircles said second receptacle (20).

## Description

### Technical Field of the Invention

The present invention relates to a tea preparing apparatus and more particularly a double receptacle automatic tea machine with a mechanical thermostat.

### Background of the Invention

Tea is traditionally consumed on a daily basis in large quantities in the country of the applicant. A good flavor tea is believed to be prepared by way of boiling water in a first receptacle and steeping tea leaves in hot water in a second receptacle.

A common problem of automated tea preparing machines is that they provide only a limited automation by which water is boiled in a first receptacle and then kept warm therein as long as preferred to allow brewing of tea leaves in a second top receptacle. Therefore, to complete brewing, the user himself must add water to the top receptacle from the boiling receptacle; which means a step which is merely user dependant to the extent that in the absence of user intervention, the whole tea preparing process is aborted is in question.

Nevertheless, it is observed that tea consumers are not reluctant to involve in the tea preparing process and yet prefer such "half-automated" tea preparing machines to conventional non-electrical tea preparing methods. A fully automated tea preparing apparatus having a reasonable price tag and which can transfer boiled water to the top receptacle where dry tea leaves lie is yet believed to be a major step toward consumer satisfaction.

Fully automated machines, on the other hand, although requiring no user intervention must appropriately be prepared for operating, i.e. brewing receptacles must be positioned appropriately relative to boiling receptacles for preventing burning hazards which might occur during transfer of heated water between receptacles. To that end, fluid passage must be secured prior to effecting transfer of heated water.

The present invention therefore provides a fully automated tea machine requiring no user intervention. To that end, heated water is automatically added to a brewing receptacle and fluid communication between receptacles does not pose a risk of burning as said fluid communication conduits are directly accessible to users.

### Objects of the Invention

Primary object of the present invention is to provide an electrical tea machine which is fully automated to the extent that it can carry out both boiling and brewing operations without user intervention being necessitated.

Another object of the present invention is to provide a fully automated tea machine in which heated water is automatically added to a brewing receptacle and fluid communication between a boiling and a brewing receptacle does not pose a risk of burning.

Another object of the present invention is to provide a fully automated tea machine in which fluid communication conduits between boiling and brewing receptacle conduits are not directly accessible to users.

### Summary of the Invention

The present invention proposes a domestic appliance and specifically a tea machine having a first receptacle for boiling water and a second receptacle containing plant leaves to be brewed.

The electrical household appliance of the invention provides that said first receptacle for boiling water and said second receptacle containing plant leaves are in thermal communication with each other. An electrical heater means is disposed at the base of said first receptacle. Fluid communication means in between said first and second receptacles provide transferring heated water from said first receptacle to said second receptacle. A transfer control means selectively opens fluid communication thereinbetween. Said first receptacle physically encircles said second receptacle.

### Brief Description of the Figures

The figures whose brief explanation are herewith provided are solely intended for providing a better understanding of the present invention and is as such not intended to define the scope of protection or the context in which said scope is interpreted in the absence of the description.
Fig. 1 demonstrates a general perspective view of the tea apparatus according to the present invention.

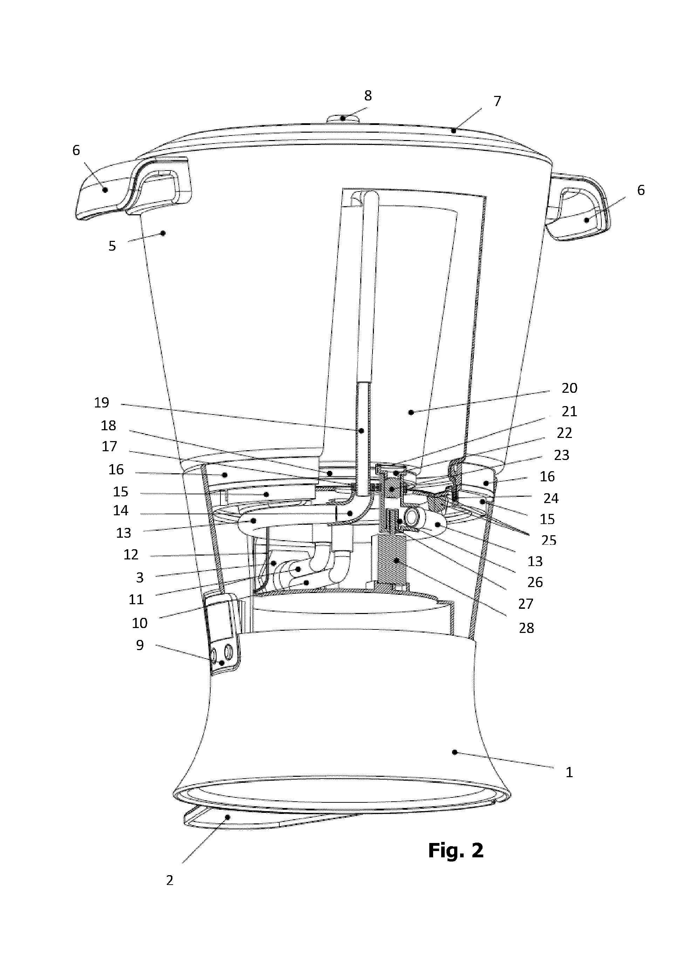

Fig. 2 demonstrates an exploded perspective view of the tea apparatus according to the present invention.

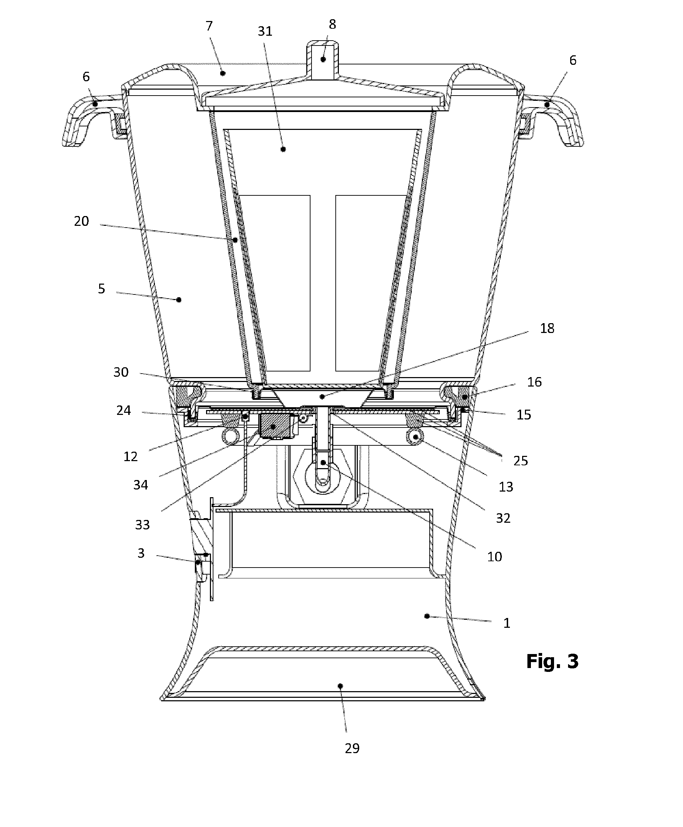

Fig. 3 demonstrates a cross-sectional view of the tea apparatus according to the present invention.

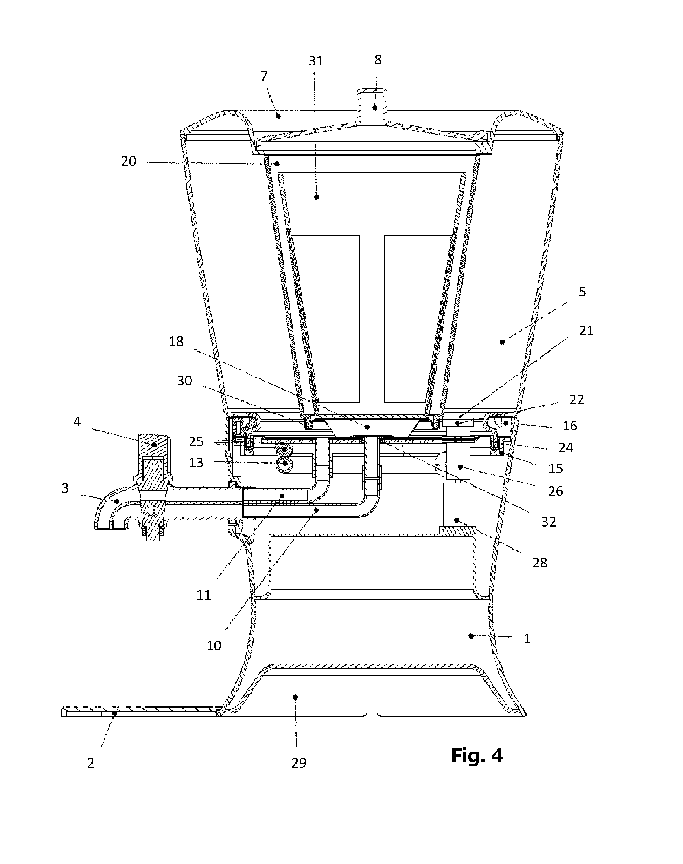

Fig. 4 demonstrates another cross-sectional view of the tea apparatus with dispenser conduits according to the present invention.
Fig. 5 demonstrates an exploded perspective view of the tea apparatus according to the embodiment with a pump.

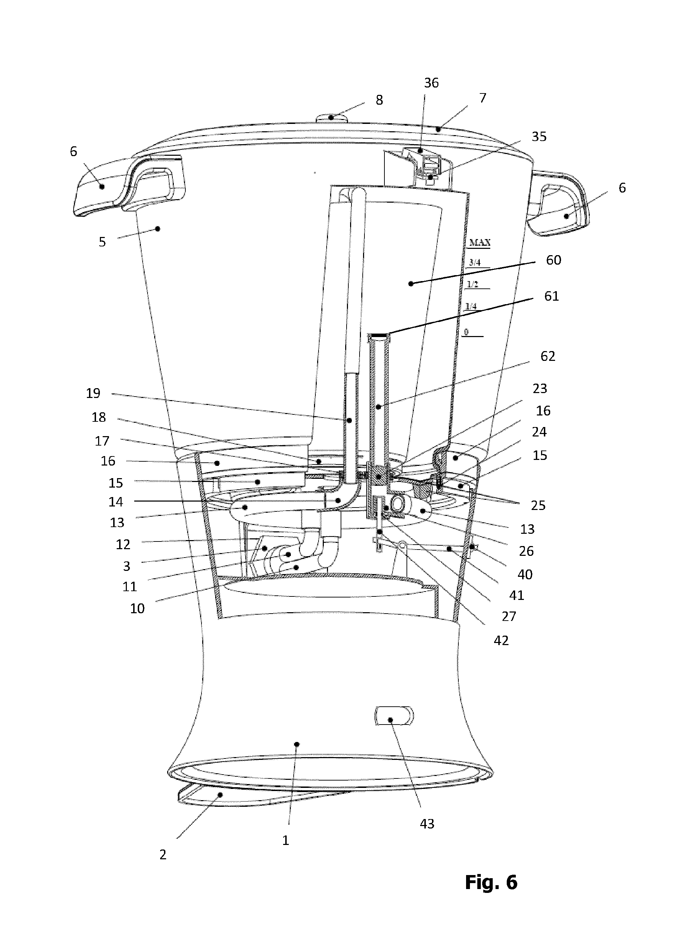

Fig. 6 demonstrates an exploded perspective view of the tea apparatus according to the embodiment with a valve arm.

### Detailed Description of the Invention

Referring now to the figures outlined above, the present invention proposes an electrical household appliance for preparing tea in a traditional manner, i.e. by way of using separate boiling and brewing receptacles (respectively 5 and 20). The appliance comprises a first receptacle (5) for boiling water prior to brewing and a second receptacle (20) in which tea leaves are placed and brewed in hot water accordingly.

Both receptacles (5, 20) are arranged to allow thermal communication and heat energy radiated from a heat source in communication with said first receptacle (5) also reach said second receptacle (20).

The heating arrangement of the tea preparation apparatus comprises an electrical heating means (25) having a nominal resistance value active power dissipation of which is decreased upon boiling of the water present in said first receptacle (5). Heat energy being dissipated may be reduced upon boiling by means of a second heating means (38) in the form of PTC resistance held in place by a support member (39).

As is generally practiced in the available art, effective power consumption by said heat source is lowered during brewing. Temperature in the first receptacle (5) may be controlled by means of a plurality of control arrangements and sensors; that is while temperature in the first receptacle (5) may be kept in a near-boiling temperature, different control schemes to allow continuous or discontinuous powering of the heat source can be applied. To that end, the machine conventionally comprises a temperature sensor (12).

The tea preparing apparatus according to the invention may comprise an electronic control unit (9) allowing a user start the apparatus automatically at a specified time or manually. The boiling receptacle (5) should be filled with water prior to switching the apparatus on. Automatic transfer of boiled water will be initiated only if the fluid communication from the first receptacle (5) to the second receptacle (20) is established as explained below.

A fluid communication between said first receptacle (5) and a boiler evacuation conduit (13) is established by means of a valve (26) selectively opening fluid communication. A brewing receptacle (20) conduit (19) provides that boiled water is poured out of its vent down, on top of plant leaves lying on the ground of the second receptacle (20).

A valve core (23) is freely pushed up against a valve body plate (22) such that boiled water rising due to siphon action in said brewing receptacle (20) conduit (19) is conveyed from said conduit's (20) upper end to said second receptacle (20).

The initiation of the siphon action allowing transfer of boiled water to said second receptacle (20) is controlled according to the temperature of the water to in said first receptacle (5) as this is believed to be crucial in the flavor of the brewed tea. To this end, said electronic control unit (9) operates said valve (26) to allow fluid communication so that siphon action is initiated at a predetermined temperature.

Said valve core (23) can be operated by a magnetic piston (28) in a conventional manner, i.e. by an activation coil located adjacent to said magnetic piston (28), said coil upon activation by a current applying a force to said piston (28). Said magnetic piston (28) slidably positioned in said valve (26) thereby allows retraction of said valve core (23) and opens fluid communication as explained above.

Boiled water, flowing through said valve (26) into said boiler evacuation conduit (13) advances through the same. Said boiler evacuation conduit (13) is an intermediary conduit between said valve (26) and said brewing receptacle (20) conduit (19). It is designed to be lying perimetrically on the ground of said first receptacle such that said resistance (25) is disposed directly in contact with said conduit (13) in between the same and the base of said first receptacle (5). To this end, water flowing through said valve (26) into said evacuation conduit (13) is continually heated by said electrical resistance (25). Therefore, water in said intermediary conduit (13) starts producing steam, which in turn advances said valve core (23), the latter blocking water inflow from said boiling receptacle (5). In other words, flow of water in the opposite direction back to said boiling receptacle (5) is prevented by said valve core (23) moved back to its blockage position by the ambient vapor pressure.

Steam pressure while moving up said valve core (23) also forces heated water up said brewing receptacle (20) conduit (19). Siphoning action due to steam pressure starts at a certain temperature. Subsequent to transfer of the available water in said intermediary conduit (13), pressure drops and said valve core (23) is thereupon moved down so as to reinitiate water flow through said valve (26). This process continues in cycles as water in said first receptacle (5) is being heated.

When 98° C temperature is reached in the first receptacle (5), said control unit (9) activates "keep warm" mode and power is supplied at a reduced wattage rate.

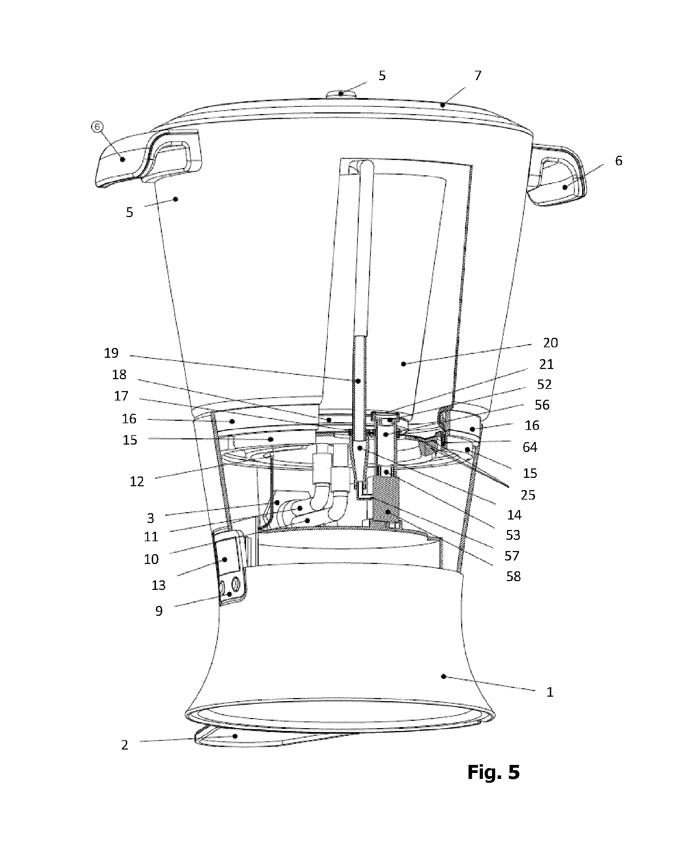

Alternatively, transfer of water into said brewing receptacle (20) conduit (19) can directly be effected by means of a pump (58) as seen in Fig. 5. The initiation of said pump (58) is effected by said electronic control unit (24) upon boiling of the water in said first receptacle (5). Said pump (58) has an inlet (53) in communication with a suction conduit (56) and an outlet conduit (57).

According to the preferred embodiment of the present invention, a simpler therefore cheaper tea apparatus fulfilling the same functions can be obtained without making use of a pump (58) or a magnetic piston (28). To that end, a simpler mechanism allowing a user to initiate transfer of boiled water from said first receptacle (5) to said second receptacle (20) can be obtained by a valve arm (41) mechanically coupled to a valve shaft (42), the latter moving said valve core (23) in said valve body (26) upon pushing a control button (40). Said valve (26) is connected to a boiling receptacle conduit (62) with an open upper end (61). Said apparatus body may be provided with visual indicators as to the water level in said first receptacle (5).

The operation principle of the tea apparatus in different embodiments of the present invention does not change apart from the functioning mechanism of said valve (26). In contrast to the embodiment of the invention with a pump (58) having no boiling evacuation conduit (13), the embodiment with said valve control button (40) features a boiling evacuation conduit (13) as in the embodiment of the present invention with said magnetic piston (28).

According to the present invention, said first receptacle (5) and said second receptacle (20) are configured such that said first receptacle (5) encircles said second receptacle (20) in a non-removable manner whereby a more efficient heat transfer is provided. To that end, said second receptacle (20) is heated from all sides except the upper side instead of just from the bottom. Said electrical resistance (25) at the base of said first receptacle (5) provides bottom heating and said first receptacle (5) surrounding said second receptacle (20) provides heating from lateral directions. Said second receptacle (20) in the form of an inverted truncated cone ensures uniform heat transfer from lateral directions with its circular cross-section through its longitudinal axis.

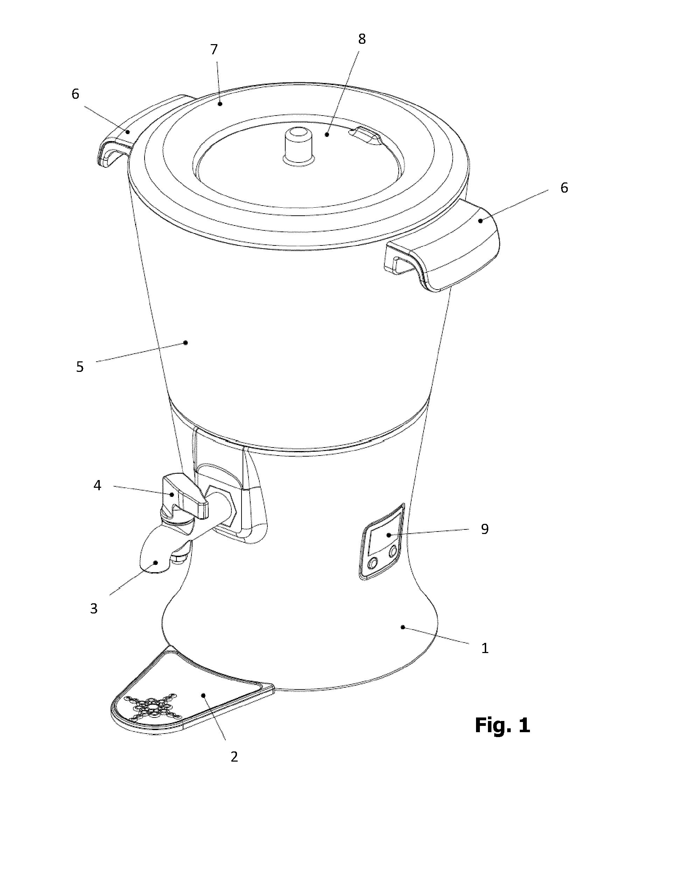

Said apparatus body according to the present invention comprises a skirt portion (1) with an emptied inner portion (29), a water tray (2) and a two-way tap (3) with a handle (4). Said apparatus body further comprises lateral handles (6) and a lid (7) with an inner lid (8) specific to said brewing receptacle (20). Said first and second receptacles (5, 20) are connected with said two-way tap (3) through respective conduits (11, 10). Said brewing receptacle conduit (19) is connected to said boiler evacuation conduit (13) by means of a connection hose (14). The second receptacle (20) comprises a lid (8) as seen in Fig. 1.

Said electrical resistance (25), being protected by a silicon member (64), is encircled by a flange portion (15), the latter extending within a circular resistance holder (16). A set of circular sealing elements (17, 30) are provided around the base of said second receptacle (20) maintained by a flange portion (18). Said second receptacle (20) is provided with a filtering means (31). A sealing member (32) is provided around the mouth of said brewing receptacle (5) tap conduit (10).

A thermostat (31) is conventionally used to interrupt current flow through said heating means (25). Further, the machine conventionally comprises a steam switch (35) and a steam switch button (36). The apparatus can typically be set to boiling mode by said steam switch button (36). An on-off button (43) provides powering of the apparatus.

## Claims

1. An electrical household appliance comprising a first receptacle (5) for boiling water, a second receptacle (20) in thermal communication with said first receptacle (5), in which plant leaves are placeable in heated water for brewing purposes, electrical heater means (25) disposed at the base of said first receptacle (5), fluid communication means (13, 19) in between said first and second receptacles (5, 20) for transferring heated water from said first receptacle (5) to said second receptacle (20) and a transfer control means (26) selectively opening fluid communication thereinbetween wherein said first receptacle (5) physically encircles said second receptacle (20).

2. An electrical household appliance as set forth in Claim 1 wherein fluid communication between said first receptacle (5) and a boiler evacuation conduit (13) is established by means of a valve (26).

3. An electrical household appliance as set forth in Claim 1 wherein said electrical resistance (25) is perimetrically disposed at the base of said first receptacle (5) such that said resistance (25) is directly in contact with said conduit (13) in between the same and the base of said first receptacle (5).

4. An electrical household appliance as set forth in Claim 1, 2 or 3 wherein a brewing receptacle (20) conduit (19) extends to the top of said second receptacle (5) with its vent facing down the ground of the second receptacle (20).

5. An electrical household appliance as set forth in Claim 1, 2, 3 or 4 wherein a temperature sensor (12) is provided for sensing boiling of the water in said first receptacle (5), upon which said transfer control means (26) selectively opens fluid communication in between said first and second receptacle (5, 20).

6. An electrical household appliance as set forth in Claim 5 wherein said transfer control means (26) is a valve with a valve core (23) being movable such that boiled water in said first receptacle is selectively allowed into said boiler evacuation conduit (13) or water in said boiler evacuation conduit (13) is kept from moving back to said first receptacle (5).

7. An electrical household appliance as set forth in Claim 6 wherein said valve core valve (23) is operable by a magnetic piston (28) having an activation coil.

8. An electrical household appliance as set forth in Claim 5 wherein said transfer control means (26) is a pump (58).

9. An electrical household appliance as set forth in Claim 5 wherein said transfer control means (26) is a valve arm (41) mechanically coupled to a valve shaft (42), the latter moving said valve core (23) in said valve body (26) upon pushing a control button (40).

10. An electrical household appliance as set forth in Claim 1 wherein said second receptacle (20) is in the form of an inverted truncated cone.

11. An electrical household appliance as set forth in Claim 1 wherein said brewing receptacle (20) conduit (19) extend perpendicular with respect to said boiler evacuation conduit's (13) plane being parallel to the ground of said first receptacle (5).
